# DEMANDE DE BREVET EUROPEEN

(11) **EP 3 637 373 A1**
(43) Date de publication de la demande: **15.04.2020**
(21) Numéro de dépôt: 19202256.4
(22) Date de dépôt: 09.10.2019
(51) Int. Cl.: G06T 17/05, G06T 19/00

(54) **MOYEN DE STOCKAGE INFORMATIQUE**

(30) Priorité: 09.10.2018 FR 1859344
(71) Demandeur: Soletanche Freyssinet, 92500 Rueil-Malmaison (FR)
(72) Inventeur: RABOT, Yohann, 31500 TOULOUSE (FR); HOVHANESSIAN, Gilles, 92160 ANTONY (FR); PERAZIO, Guy, 38160 SAINT-ROMANS (FR)
(74) Mandataire: Nony

(57) **Abrégé**

Moyen de stockage (11) informatique sur lequel est stocké au moins un modèle numérique 3D d'au moins un objet, ce modèle comportant un ensemble de voxels modélisant cet objet et des métadonnées associées aux voxels, comportant au moins une information sur la précision avec laquelle tout ou partie de ces voxels est référencée spatialement

## Description

La présente invention concerne de façon générale les systèmes d'information géographique et plus particulièrement les modèles numériques 3D géo-référencés et leurs utilisations.

### Etat de l'art

Les modèles numériques géo-référencés, notamment en milieu urbain, occupent actuellement une importance croissante dans de nombreuses applications pratiques. Ces applications incluent la conception architecturale, l'aménagement urbain et territorial, ou encore les villes intelligentes. Les modèles numériques fournissent une copie virtuelle de la réalité et peuvent ainsi servir de base d'information pour traiter des questions d'urbanisme, ou l'intervention sur des réseaux existants par exemple.

Il est connu d'utiliser des systèmes de positionnement par satellites pour géo-localiser les acquisitions numériques d'un environnement donné. Cependant, à moins d'utiliser des récepteurs très coûteux, et des procédés techniques peu connus, la précision est généralement insuffisante pour de nombreuses applications liées à la topographie.

Par ailleurs, la réception du signal GPS peut s'avérer difficile dans certains milieux urbains ou sous couvert végétal.

En outre, il est connu d'utiliser des systèmes d'information géographique en 2.5D pour obtenir une information de localisation. Cette information est calculée en combinant l'information de localisation en (X, Y) délivrée par un GPS et une information d'altitude Z fournie par une carte altimétrique telle qu'une carte topographique de l'IGN. Cependant, ces systèmes associent la même altitude Z à chaque couple de coordonnées (X, Y) et ne garantissent donc pas l'obtention d'une information précise en X, Y et Z.

Il est connu également de faire appel à un topographe afin de réaliser des modèles numériques de terrains ou de bâtiments construits. Le géo-référencement de ces modèles s'effectue à partir d'un relevé de points caractéristiques. L'emplacement de ces points est préalablement repéré par le topographe. Pour géo-localiser les points caractéristiques, le topographe peut utiliser un théodolite, un tachéomètre, une station totale ou un système GNSS et s'aider de cibles placées en des points précis. Cette opération exige l'intervention d'un opérateur qualifié, et peut présenter un caractère temporaire dans certains cas, par exemple d'un chantier lorsque les cibles disparaissent à la fin de celui-ci.

Les fabricants d'appareils de mesure par topographie laser ont développé des stations totales robotisées qui dispensent le topographe des opérations de visée des cibles et qui enregistrent les relevés topographiques automatiquement. Toutefois, l'intervention du topographe reste nécessaire pour le positionnement des cibles.

Il est connu par ailleurs d'utiliser des points marqués sur le sol ou « Ground Control Points » en anglais, visibles et géo-référencés pour recaler les acquisitions aériennes effectuées par avion, hélicoptère ou drone. Ces acquisitions aériennes peuvent être utilisées pour reconstruire une cartographie 3D d'un milieu urbain, comme décrit dans le brevet US 8818076.

La demande US2015/0170368 divulgue un procédé de géolocalisation fondé sur l'acquisition d'images par un téléphone portable par exemple, et la recherche d'une corrélation entre des points remarquables des images acquises par le téléphone et un catalogue d'images de référence dans lesquelles ces mêmes points ont été géo-référencés. Le procédé peut comporter la sélection sur l'image des points que l'on cherche à géo-localiser. Un tel procédé dépend fortement de la qualité d'acquisition des images et de la capacité du système informatique à détecter les images de référence correspondantes.

Il a été proposé dans l'ouvrage BIM & BTP Editions Méthodes BTP 2017 d'intégrer dans une maquette numérique urbaine la position de chaque réseau, afin de signaler au conducteur d'un engin leur proximité. Toutefois, comme le souligne l'auteur, une difficulté provient du manque de fiabilité des DOE (Dossiers d'Ouvrages Exécutés) dans la pratique, que ne peut pas résoudre à elle seule une telle maquette.

Il existe par conséquent un besoin pour faciliter la réalisation d'ouvrages ou l'intervention sur des sites de façon à permettre de confier ces missions à des opérateurs moins qualifiés qu'un topographe ou faciliter le travail de ce dernier.

Il existe de nombreuses situations où la connaissance avec précision d'une zone donnée permettrait de réduire le coût et la durée des chantiers dans cette zone.

Il existe également un intérêt pour connaître rapidement avec précision sa position dans un environnement donné ou repérer avec précision un objet dans celui-ci, tout en limitant les risques liés à l'imprécision des mesures.

### Exposé de l'invention

L'invention vise à répondre à tout ou partie de ces besoins et elle y parvient selon un premier de ses aspects, en proposant un moyen de stockage informatique sur lequel est stocké au moins un modèle numérique 3D d'au moins un objet, ce modèle comportant un ensemble de voxels modélisant cet objet et des métadonnées associées aux voxels, comportant au moins une information sur la précision avec laquelle tout ou partie de ces voxels est référencée spatialement.

L'invention a encore pour objet le procédé dans lequel on enregistre sur le moyen de stockage informatique ledit modèle numérique 3D, ce modèle comportant un ensemble de voxels modélisant cet objet et des métadonnées associées aux voxels, comportant au moins une information sur la précision avec laquelle tout ou partie de ces voxels est référencée spatialement. Ce procédé peut comporter l'étape consistant à générer les métadonnées associées aux voxels.

Le modèle numérique 3D et les métadonnées sont destinés à être lus par un circuit informatique programmé pour leur lecture.

L'invention permet de connaître facilement la précision avec laquelle le modèle numérique est géo-référencé. Ainsi un opérateur connaissant cette précision peut prendre les mesures qui s'imposent si celle-ci est insuffisante pour opérer sans risque. A contrario, si la précision est suffisante, l'opérateur peut s'épargner des vérifications ou mesures additionnelles.

L'invention s'avère utile pour des applications nécessitant des modèles référencés avec une bonne précision, par exemple meilleure que 40cm, mieux 10cm, encore mieux meilleure que 1 cm, notamment dans le cadre de réalisations de travaux urbains. En effet, grâce à l'invention, il est possible d'évaluer la pertinence des modèles numériques 3D disponibles et d'utiliser le ou les modèles numériques possédant une précision compatible avec l'application envisagée et /ou d'intégrer cette information relative à la précision dans le calcul des risques et dans les prises de décision.

L'invention offre la possibilité de contrôler la précision de localisation à l'échelle du voxel, donc avec une résolution très fine si l'on souhaite, et d'enrichir les modèles numériques en identifiant et/ ou en corrigeant localement les voxels pour lesquels la précision est en-dessous d'un seuil donné. In fine, cette fonctionnalité permet d'obtenir des modèles numériques précis et les plus proches possibles de la réalité physique. Ces modèles numériques peuvent être utilisés pour la réalisation des travaux sur un chantier, en particulier des travaux nécessitant une très bonne précision tels que des travaux d'excavation en milieu urbain. Par exemple, si une tranchée est susceptible d'être creusée dans la chaussée pour accéder à des réseaux enterrés, il est souhaitable de pouvoir repérer l'emplacement de cette tranchée et des réseaux avec bonne précision.

Les modèles numériques peuvent également être utilisés dans des activités de maintenance afin de réduire le nombre de déplacements des opérateurs. A titre d'exemple, dans le cadre de la maintenance d'un réseau d'égouts, l'invention permet de supprimer l'étape de repérage sur place puisque les opérateurs peuvent procéder à des repérages et simulations directement sur les modèles numériques.

L'invention peut également être utilisée pour détecter des changements d'un environnement, par exemple des modifications impactant l'urbanisme.

L'invention peut également s'appliquer aux véhicules autonomes, qui peuvent s'orienter dans l'espace à partir des modèles numériques 3D.

Les modèles numériques 3D stockés dans le moyen de stockage, contrairement à un système d'information géographique en 2.5D, permettent de prendre en compte la modélisation de tous les points associés à un même couple (X, Y). Les modèles numériques 3D peuvent ainsi correspondre à des modélisations intérieures d'un objet, notamment d'un bâtiment, d'un objet dans le sous-sol ou d'une cavité. Ces modélisations sont difficiles voire impossibles avec des modèles en 2.5D.

### Voxel

Par « *voxel »* on désigne une unité volumétrique d'un espace 3D numérique, de préférence de forme cubique. Cette unité peut être assemblée en plusieurs unités par des opérations mathématiques pour créer des objets de formes différentes. Le voxel peut être plein ou vide, ce qui correspond à la présence ou non de matière.

### Métadonnées

Par « *métadonnées* » on désigne des données qui s'ajoutent aux données géométriques nécessaires à la construction du modèle, comme des propriétés locales, notamment de couleur, de texture, de transparence ou des données sur les matériaux correspondants dans la réalité.

Les métadonnées associées à un voxel ou un ensemble des voxels comportent selon l'invention au moins une information sur la précision avec laquelle ce voxel ou cet ensemble de voxels est référencé spatialement.

Les métadonnées peuvent comporter en outre une information relative à un attribut de l'objet, notamment une date de création ou de mise à jour de la donnée, et/ou concernant l'origine de la donnée et son moyen d'acquisition, ce qui permet d'assurer la traçabilité des données et le cas échéant de donner une information sur la fiabilité de la donnée. En particulier, les métadonnées peuvent comporter un historique des différentes acquisitions des données réalisées dans une même zone, et concernant par exemple un même objet.

On peut associer à chaque voxel des métadonnées. Toutefois, lorsque cela est possible, on peut avoir intérêt à enregistrer des métadonnées s'appliquant à un ensemble de voxels à la fois. Dans ce cas, on peut connaître pour chacun des voxels de cet ensemble les informations additionnelles apportées par les métadonnées à partir de l'accès aux métadonnées de l'ensemble des voxels.

### Moyen de stockage

Par « *moyen de stockage informatique »,* il faut comprendre tout moyen informatique permettant de stocker des données et d'exécuter des lignes de commandes, serveur, un ordinateur PC portable ou de bureau, tablette, smartphone ou autre moyen équivalent et support d'enregistrement tel que bande magnétique, disque optique, disque dur, disque SSD, carte SD ou clé USB.

Ce moyen informatique peut être connecté à un réseau tel qu'Internet ou de téléphonie par des moyens de connexion ou communication.

### Objet

L'objet concerné par le modèle numérique 3D peut être choisi parmi des éléments d'infrastructures, notamment routes, ponts, tunnels, voies ferroviaires, de barrages, de bâtiments, notamment l'enveloppe extérieure et intérieure, de réseaux aériens ou enterrés, de mobilier urbain et/ou d'équipements, de navires.

L'objet peut en outre correspondre à un quartier ou à une ville, et s'étendre ainsi sur plus de 10000 m² par exemple, voire plus de 1km², voire encore plus, par exemple plus de 10km².

### Modèles 3D numériques

Par « *modèle numérique 3D »* il faut comprendre un ensemble de données permettant la représentation virtuelle d'un objet au moyen d'un logiciel de modélisation 3D.

Un tel modèle permet la reconstitution du volume de solides par assemblage de voxels.

Le modèle numérique 3D peut être obtenu à partir de données provenant d'une acquisition numérique optique et/ou résultant d'un calcul. L'acquisition peut être sous forme d'images et/ou de séquences vidéo et/ou sous forme de nuages de points obtenus par lasergrammétrie.

Le modèle numérique 3D peut être construit à l'aide d'une technique de photogrammétrie, de lasergrammétrie et/ou d'une utilisation conjointe de ces deux procédés. Les deux procédés de photogrammétrie et de lasergrammétrie peuvent être couplés à des techniques de voxelisation afin de représenter l'objet sous forme de voxels. Un exemple d'une telle technique est présenté dans l'article «Hinks, Tommy, et al. "Point cloud data conversion into solid models via point-based voxelization." Journal of Surveying Engineering 139.2 (2012): 72-83.»

Le modèle numérique 3D peut avoir une densité de voxels homogène. Les voxels sont alors de taille identique.

En variante, le modèle numérique 3D possède une densité de voxels inhomogène. Le modèle numérique 3D peut posséder des régions où la densité des voxels est forte et la taille des voxels relative par rapport aux dimensions de l'objet est petite et des régions avec une densité faible de voxels, où les voxels sont de grande taille.

Les modèles numériques 3D peuvent correspondre à des modèles 3D de zones urbaines, par exemple des quartiers, des rues comportant des bâtiments, le modèle numérique 3D pouvant correspondre au modèle 3D d'une ville entière.

On peut ainsi avoir enregistré sur le moyen de stockage selon l'invention des modèles numériques 3D correspondant à des objets couvrant une étendue supérieure à 1 km².

On peut enregistrer des modèles numériques 3D correspondant à des objets disséminés avec une densité supérieure à 100 par km².

Les modèles numériques 3D peuvent correspondre à des modèles de bâtiments par exemple.

Le moyen de stockage selon l'invention peut comporter au moins deux modèles numériques 3D correspondant à des objets séparés d'une distance inférieure à 100 m.

### Information de précision

L'information sur la précision avec laquelle un voxel est référencé spatialement peut comporter au moins une indication sur la manière, relative et/ ou absolue, dont cette précision est définie.

Dans le cas où cette précision est définie de manière relative, l'information peut comporter une première indication sur la précision de positionnement relative dudit voxel au sein d'un sous-ensemble auquel appartient le voxel et une deuxième indication sur la précision de positionnement de ce sous-ensemble dans un repère (R). A titre d'exemple, dans le cas où l'objet en question est un bâtiment, le voxel peut correspondre à un point particulier de la façade, par exemple un coin d'une fenêtre, le sous ensemble peut correspondre à la fenêtre et le repère (R) peut correspondre à un repère local associé à la façade. L'origine du repère située en bas de la façade par exemple.

Cela permet d'une part de mieux estimer la précision du positionnement, notamment dans l'optique d'une réduction des erreurs de positionnement des objets dans le repère (R), et d'autre part de pouvoir travailler localement par rapport à un sous-ensemble en ayant à la fois le référencement spatial par rapport à ce sous-ensemble et une estimation de la précision de ce référencement. Cela peut s'avérer très utile dans des applications nécessitant une intervention locale telles la restauration de bâtiments, notamment les façades des bâtiments.

La position dudit repère (R) peut être elle-même connue dans un autre référentiel (R') et cette position peut être dépendante d'au moins une grandeur enregistrée dans le moyen de stockage ou pouvant être calculée à partir de paramètres renseignés dans ce moyen de stockage, notamment de déformations du sol, en particulier du type marée terrestre, surcharge océanique, surcharge atmosphérique et/ou mouvements tectoniques, altération linéaire, variation du géoïde. Le référentiel (R') est de préférence un référentiel absolu. Le référentiel (R') est par exemple choisi parmi les suivants : Réseau Géodésique Français 1993 (RGF93), World Geodetic System (WGS84), International Terrestrial Rotational Service (ITRS) ou European Terrestrial Reference System (ETRS).

La position dudit repère (R) peut être connue dans ledit référentiel (R') via une cascade de repères intermédiaires (Ri).

La précision avec laquelle la position d'un repère intermédiaire (Ri) est connue relativement à au moins un autre repère (Rj) de ladite cascade de repères intermédiaires, peut être enregistrée dans le moyen de stockage. Ainsi, la précision avec laquelle la position dudit repère (R) est connue dans ledit référentiel (R') peut être calculée à partir des précisions de localisation de chacun des repères intermédiaires (Rk) de ladite cascade de repères intermédiaires.

L'intérêt de cette approche est qu'elle permet d'avoir une meilleure estimation du positionnement en prenant en compte les différents repères intermédiaires, ce qui améliore la précision du calcul de la position du repère R dans le référentiel absolu.

Le nombre de repères intermédiaires (Rk) en cascade, dont les précisions de localisation sont de préférence enregistrées dans le moyen de stockage, peut être différent pour au moins deux objets référencés à l'aide de ces repères intermédiaires.

Le moyen de stockage selon l'invention peut comporter des modèles numériques 3D dont les voxels sont géo-référencés avec une précision de localisation meilleure que 0,4 m dans un référentiel, de préférence absolu, mieux meilleure que 0,2 m, encore mieux meilleure que 0,1 m, notamment comprise entre 1 et 10 cm.

L'invention a encore pour objet une plateforme informatique comportant un moyen de stockage selon l'invention.

La plateforme peut avantageusement comporter une interface graphique permettant de visualiser l'objet modélisé ainsi que sa précision de localisation, notamment sous la forme d'au moins une indication numérique ou d'une valeur de confiance absolu ou probabiliste.

L'interface permet d'accéder directement à l'information relative à la précision, soit sous forme numérique en cliquant par exemple sur le voxel en question, soit à l'aide d'une représentation graphique d'une valeur de confiance. Ce dernier cas est particulièrement intéressant puisqu'il permet de distinguer facilement les voxels qui possèdent une bonne précision et ceux qui ont une précision moindre.

L'interface peut comporter en outre un outil de traitement statistique qui permet l'analyse des données et peut permettre de filtrer en fonction d'un seuil de précision par exemple.

L'interface peut également comporter un outil de recherche de corrélation entre au moins deux modèles numériques 3D dans l'optique de repérer une ou plusieurs zones communes aux deux modèles.

L'outil de recherche de corrélation peut avantageusement délivrer un score de corrélation allant d'une valeur basse quand les deux modèles ne possèdent aucune zone commune à une valeur haute quand les deux modèles numériques correspondant à un même objet sont identiques. L'invention a encore pour objet un procédé de géolocalisation, notamment en extérieur, d'un outil d'acquisition numérique présent au sein d'une zone donnée, notamment d'un environnement extérieur urbain, ce procédé comportant les étapes consistant à:
a) réaliser avec l'outil numérique au moins une acquisition de son environnement,
b) identifier par une technique de corrélation entre les données acquises et des modèles numériques 3D, au moins un modèle numérique 3D d'au moins un objet de ladite zone, ce modèle étant stocké dans un moyen de stockage selon l'invention,
c) calculer, à partir de cette identification et/ou de la manière dont ledit modèle numérique 3D est perçu par l'outil, les coordonnées et l'orientation de l'outil numérique dans un référentiel, de préférence absolu.

Grâce à l'invention, une fois l'outil numérique localisé, celui-ci peut être utilisé pour diverses opérations, telles que par exemple acquérir un nuage de points en vue d'obtenir un modèle numérique 3D de l'environnement de l'outil, constater une évolution de cet environnement par comparaison avec une modélisation précédemment effectuée, ou localiser des points d'intérêt donnés, présents dans l'environnement de l'outil.

Outre la localisation de l'outil, il est possible de délivrer une information sur la précision de géo-localisation de celui-ci. Celle-ci peut être obtenue à partir d'au moins une information sur la précision avec laquelle tout ou partie des voxels des modèles numériques 3D utilisés pour l'identification est référencée spatialement.

La présente invention a encore pour objet un procédé de géolocalisation, notamment en extérieur, d'une acquisition numérique d'une zone donnée effectuée avec un outil d'acquisition numérique, ce procédé comportant les étapes consistant à:
a')identifier par une technique de corrélation entre les données acquises et des modèles numériques 3D, au moins un modèle numérique 3D d'au moins un objet de ladite zone, ce modèle étant stocké dans un moyen de stockage selon l'invention,
b')géo-localiser ladite acquisition numérique à partir de cette identification.

Le procédé peut comporter en outre une étape consistant à délivrer une information sur la précision de géo-localisation de l'outil, calculée à partir d'au moins une information sur la précision avec laquelle tout ou partie des voxels du modèle numérique 3D ayant servi pour l'identification est référencé spatialement.

### Outil numérique

Par « outil numérique » on désigne tout système permettant la mise en œuvre du procédé selon l'invention et notamment d'acquérir des informations spatiales sur un environnement donné. L'outil permet de réaliser une acquisition de son environnement permettant de générer un modèle numérique 3D de celui-ci.

L'outil numérique peut bénéficier de moyens de communication lui permettant d'interroger le moyen de stockage selon l'invention. En variante, l'outil dispose de la mémoire nécessaire pour stocker les informations de ladite base, ou au moins une partie de celle-ci.

L'outil peut comporter un processeur lui permettant d'effectuer au moins une partie du traitement de l'étape c) ci-dessus. Une partie au moins du traitement et des calculs peut être déportée sur un serveur distant, par exemple intégré à la plateforme numérique selon l'invention, avec laquelle l'outil peut être connecté.

L'outil peut comporter un système de télémétrie. L'outil peut comporter tout élément connu dans les appareils de lasergrammétrie ou photogrammétrie. L'outil peut comporter au moins un capteur photo ou vidéo pour acquérir des informations sous forme d'images ou un ou plusieurs scanners laser statiques, par exemple LEICA BLK360, Z+F IMAGER 5010C ou FARO FOCUS, ou dynamiques tels que LEICA PEGASUS 2.0 ou LEICA BACKPACK permettant d'acquérir les informations sous la forme de nuages de points. Le scanner laser peut avantageusement être associé à un capteur photo ou vidéo. L'outil peut comporter un scanner de type LIDAR.

Avantageusement, l'outil numérique est associé à un GPS permettant de fournir les coordonnées des données acquises. L'outil peut comporter un système de visée laser permettant de pointer l'outil sur un élément géo-localisé ou vers un point d'intérêt dont on souhaite connaître la position dans le référentiel absolu. L'outil numérique peut ainsi comporter un laser et au moins une caméra. Le laser peut aider à viser un point d'intérêt et la caméra peut servir à lire les données présentes sur l'élément ou à acquérir une image de son environnement immédiat.

L'outil peut comporter un trépied et une articulation permettant de l'orienter en azimut et élévation.

L'outil peut également comporter un système capable de lire une information propre à un élément fournissant une information additionnelle de positionnement, le cas échéant.

### Zone

La zone en question est de préférence une zone extérieure urbaine, comportant par exemple des bâtiments tels que des immeubles d'habitations collectives ou de bureaux, des maisons individuelles, du mobilier urbain tels que des lampadaires, feux de croisement, panneaux de circulation, panneaux publicitaires, abris ou bancs, entre autres.

La zone peut encore être à l'intérieur d'un bâtiment.

La zone peut également être une zone souterraine.

### Acquisition de l'environnement de l'outil

Par « acquisition de l'environnement de l'outil » il faut comprendre un enregistrement de données spatiales. L'acquisition des données spatiales peut être effectuée par exemple sous forme de données de jeux d'images ou de séquences vidéo, ou sous forme de nuages de points.

L'acquisition peut être réalisée avec au moins une rotation de l'outil sur lui-même autour d'un axe de rotation, de préférence fixe durant cette rotation, ou à l'aide de plusieurs capteurs ayant des axes de visée différents.

L'acquisition peut être réalisée avec l'outil en mouvement pendant ladite acquisition.

L'acquisition peut être réalisée à l'aide d'au moins une caméra, équipée d'un télescope par exemple.

L'identification à l'étape b) et/ou à l'étape a') peut faire intervenir au moins une information additionnelle de positionnement. Cette information additionnelle de localisation peut comporter la position de l'outil telle que fournie par un système de géolocalisation par satellites, de préférence standard et peu coûteux ou une information de géolocalisation telle que fournie par un réseau de téléphonie mobile. L'information de localisation additionnelle peut ainsi avoir une précision de localisation dans le référentiel moindre que celle associée aux voxels d'un ou des modèles numériques 3D répertoriés dans le moyen de stockage à partir desquels s'effectue l'identification à l'étape b) et/ou l'étape b'). La précision de localisation de l'information additionnelle peut notamment être moins bonne que 1m.

Cette information permet d'effectuer une première sélection parmi les modèles numériques 3D de référence disponibles dans le moyen de stockage, pour faire porter l'identification seulement sur un ensemble de modèles numériques 3D proches géographiquement de l'acquisition et/ou outil. Cela permet de réduire le temps de traitement, puisque ainsi la recherche de corrélation ne s'effectue in fine que sur une sélection restreinte de modèles numériques 3D.

L'information additionnelle peut également être apportée par un élément de repérage présent dans l'environnement de l'outil, cet élément étant par exemple identifiable individuellement et porteur de données d'identification pouvant être lues par l'outil. Cet élément peut être géo-localisé avec précision ou non.

L'acquisition de l'environnement étant réalisée par télédétection laser et/ou par vidéo.

Le procédé peut comporter une étape additionnelle d) et /ou c') dans laquelle le modèle numérique correspondant à l'acquisition numérique géo-localisée à l'étape c) et/ ou b') est mis à l'échelle à partir du modèle numérique 3D de référence.

Par « *mettre à l'échelle* », il faut comprendre une méthode visant à établir une correspondance métrique entre le modèle numérique 3D et l'objet que l'on cherche à modéliser.

La mise à l'échelle peut correspondre à repérer des points communs entre le modèle numérique 3D et le modèle de référence, à calculer la distance entre ces points à la fois dans le modèle de référence et dans le modèle numérique 3D, à calculer le ratio de mise à l'échelle puis de l'appliquer au modèle numérique 3D.

La mise à l'échelle peut être réalisée de manière automatique avec un logiciel connu par l'homme du métier, comme par exemple Blender ou Autodesk.

En variante, elle peut être effectuée de manière semi-automatique.

### Enrichissement du moyen de stockage

Le procédé peut comporter en outre une étape additionnelle e) et /ou d') dans laquelle on enregistre au sein du moyen de stockage le modèle numérique correspondant à l'acquisition numérique géo-localisée à l'étape c) et / ou b') ainsi qu'une information relative à la précision de localisation de ce modèle.

Cette étape permet ainsi d'enrichir le moyen de stockage en y ajoutant le nouveau modèle numérique généré à partir de l'acquisition numérique. Cette étape permet également de mettre à jour les modèles 3D existants, soit en substituant les voxels des modèles de référence ayant une mauvaise précision par des voxels du nouveau modèle numérique, soit en affinant localement la densité de voxels. Enfin, quand des objets sont apparus ou ont disparu entre deux acquisitions, il est possible de les ajouter ou supprimer de l'ancien modèle 3D.

La mise à jour des modèles numériques existants est de préférence accompagnée par l'enregistrement dans le moyen de stockage de la date de la nouvelle acquisition, de son origine ainsi que de sa précision. Ainsi, il est possible d'accéder, pour une même zone, à l'historique des différentes acquisitions qui ont été faites. Cet historique permet ainsi d'avoir des données en 4D.

Les modèles numériques 3D peuvent ne pas être figés dans le temps. Leur évolution peut être indiquée, par exemple par affichage sur un écran ou sur une impression, à l'aide de vecteurs de déplacement associés à tout ou partie de leur voxels. Le vecteur de déplacement associé à un voxel d'un modèle numérique 3D peut être une fonction du temps. Ce vecteur peut être calculé en comparant les coordonnées du voxel enregistrées au court du temps dans l'historique des acquisitions. Le vecteur de déplacement peut ainsi être utilisé pour détecter des changements d'un environnement, par exemple des modifications impactant l'urbanisme. Le procédé peut ainsi comporter une étape consistant à comparer deux modèles 3D du même objet au cours du temps et générer à partir de cette comparaison un fichier renseignant sur l'évolution de la position de certains voxels d'un modèle à l'autre.

L'invention a encore pour objet un procédé de construction d'un modèle numérique 3D comportant les étapes consistant à :
- Procéder à au moins une acquisition numérique d'au moins un objet géo-localisé,
- enregistrer dans un moyen de stockage selon l'invention, une information relative à la précision de localisation de la ou les acquisitions numériques,
- générer à partir de cette ou ces acquisitions au moins un modèle numérique 3D,
- attribuer à au moins un voxel de ce modèle 3D une information relative à la précision de localisation de celui-ci.
- enregistrer ce modèle numérique 3D géo-référencé dans le moyen de stockage.

### Brève description des figures

L'invention pourra être mieux comprise à la lecture de la description détaillée qui va suivre, d'exemples non limitatifs de mise en œuvre de celle-ci, et à l'examen du dessin annexé, sur lequel :
- Les figures 1a àt 1f illustrent un exemple de procédé de construction d'un modèle numérique 3D géo-référencé selon l'invention,
- la figure 2 est un schéma en blocs illustrant un exemple de procédé de géo-localisation selon l'invention,
- la figure 3 est un schéma en blocs relatif au traitement d'identification effectué,
- la figure 4 illustre l'acquisition d'un objet,
- les figures 5a et 5b illustrent un exemple d'utilisation d'une cascade de repères, et
- les figures 6a et 6b illustrent des exemples de visualisation d'un objet modélisé avec une information relative à la précision de localisation des voxels.

### Description détaillée

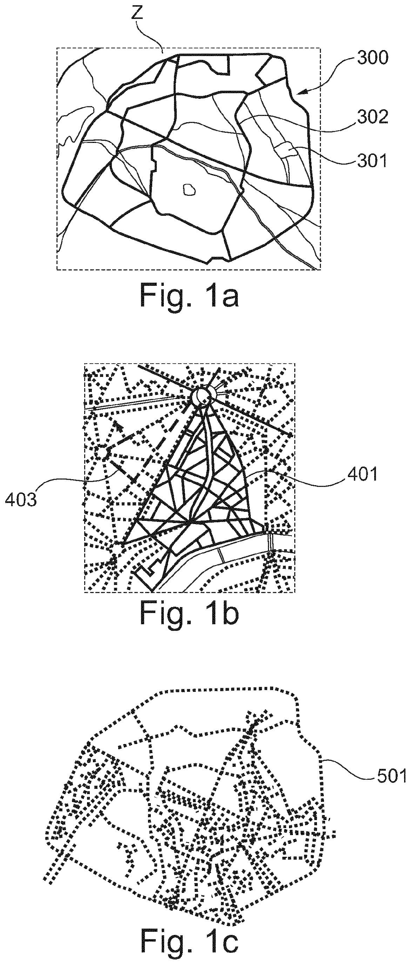

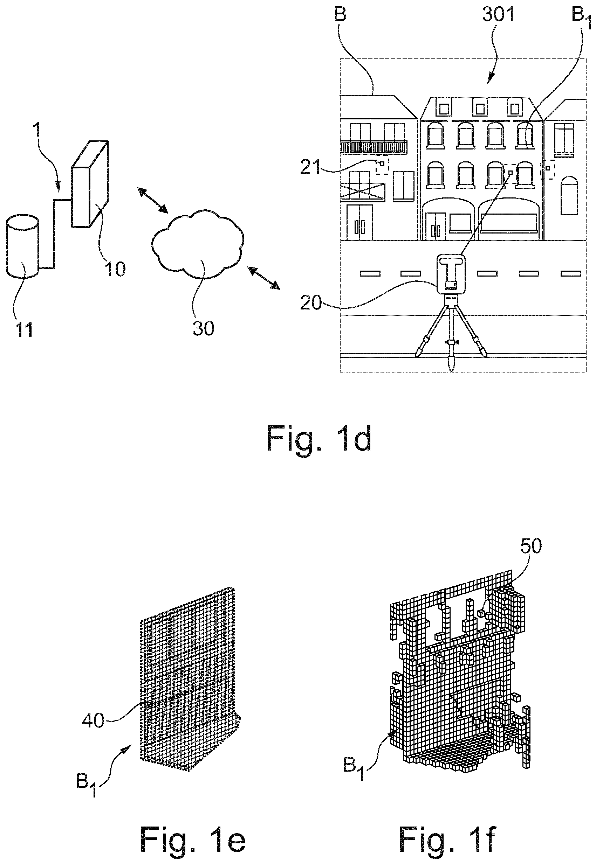

Les figures 1a à 1f illustrent un exemple de procédé de construction d'un modèle numérique 3D selon l'invention.

Selon un aspect de l'invention, une acquisition est réalisée dans une ou plusieurs zones Z, de préférence terrestres, par exemple dans une ou plusieurs villes, le long de routes ou sur des ouvrages ou infrastructures de toutes sortes.

Dans l'exemple de la figure la, la zone Z est une ville. L'acquisition est réalisée en deux phases. Dans un premier temps, un maillage de référence de la zone est constitué de façon à générer une maille de référence 300. Cette maille permet de définir les limites géographiques de l'acquisition et diviser la zone en secteurs d'interventions 301. La maille de référence 300 peut en outre servir de base de travail, sur laquelle on peut recenser et visualiser les trajets effectués et les secteurs qui restent à relever. La figure 1b illustre un exemple de superposition de trajets déjà effectués 401 sur la carte ainsi qu'un trajet en cours 403.

Dans un second temps, une acquisition numérique des secteurs 301 est réalisée à l'aide d'un ou plusieurs outils numériques 20 tel qu'illustré à la figure 1d. Dans l'exemple de la figure 1d, le secteur 301 est un quartier comportant une rue avec des immeubles B. Ces outils peuvent comporter tout élément connu pour ce faire, comme des appareils de lasergrammétrie et/ ou photogrammétrie. Ils peuvent correspondre à des systèmes d'acquisition mobiles tels que LEICA PEGASUS 2.0 et /ou LEICA BACKPACK ou statiques tels que LEICA BLK360, Z+F IMAGER 5010C et/ ou FARO FOCUS. De préférence, l'acquisition est réalisée en utilisant conjointement au moins un outil statique et au moins un outil mobile. Avantageusement, les outils numériques sont associés à un système de localisation par satellite par exemple GPS permettant de fournir les coordonnées des données acquises ainsi qu'une information sur la précision de localisation des données. De préférence, une ou plusieurs antennes GPS fixes comme par exemple GPS LEICA AS10 et / ou un GPS LEICA GS15 sont également implantées à différents emplacement de la zone Z.

De préférence, des points de contrôle GPS 501 sont disséminés dans la zone Z. Dans l'exemple illustré à la figure 1c, le nombre de points de contrôle est d'environ 200 points. Ces points de contrôle permettent à la fois de valider les localisations des données de l'acquisition et de compenser celles-ci en cas d'écart. Ces points permettent également de valider la précision de localisation des données de l'acquisition.

L'acquisition peut être faite par secteur 301, notamment par quartier ou arrondissement. Les trajets suivis lors de l'acquisition sont de préférence construits de manière à se recouper pour avoir des points de contrôles aux intersections. En outre, les intersections obtenues permettent d'obtenir des informations sur la précision de localisation des données de l'acquisition. De préférence, les trajets se font en aller / retour sur les axes séparant les différents secteurs de la maille de référence. De préférence, les acquisitions sont rattachées sur la maille de « référence » et leurs trajets sont représentés sur cette maille. L'acquisition décrite ci-dessus vise à générer des modèles numériques 3D de la zone par traitement des données. De préférence, Ces dernières sont des nuages de points obtenus par télédétection laser. De manière avantageuse, l'acquisition comporte également la prise de plusieurs photos et / ou de séquences vidéos. Celles-ci peuvent permettre de texturer le nuage de points.

Outre la localisation des données, l'acquisition décrite ci-dessus permet également d'obtenir une information sur la précision de localisation de ces données.

L'acquisition peut le cas échéant être réalisée par un opérateur humain ou par un dispositif automatique. Elle peut inclure des acquisitions aériennes, réalisées par exemple par un drone.

Les acquisitions d'un même objet d'un secteur 301 de la zone Z peuvent comprendre plusieurs points de vue et être réalisées à partir de différentes positions.

On a illustré à la figure le un exemple d'un nuage de points obtenu après l'acquisition d'un bâtiment B1 du secteur 301 de la figure 1d avec un scanner laser.

Des éléments géo-localisés 21 peuvent être disposés dans l'environnement faisant l'objet de l'acquisition pour aider à géo-localiser les modèles numériques 3D obtenus.

Les données sont ensuite transmises à une plateforme 1 par exemple. Celle-ci peut comporter, comme illustré, une interface 10 avec laquelle l'outil 20 peut échanger ces données, par exemple par l'intermédiaire d'un réseau de télécommunications 30 tel que le réseau GPRS ou le réseau 3G ou 4G et un moyen de stockage 11 dans lequel ces données sont stockées. Outre les coordonnées des données, on peut enregistrer des métadonnées telles que la précision de localisation de celles-ci, la date à laquelle ces données ont été acquises, les références du secteur de l'acquisition, notamment son nom, les références de l'outil d'acquisition.

Le traitement des données de l'acquisition peut être effectué à partir d'un logiciel de traitement de nuages de points, par exemple RealWorks 10 pour les acquisitions statiques ou LEICA PEGASUS Manager pour les acquisitions dynamiques.

Pour générer un modèle numérique 3D, un algorithme de stéréovision peut être utilisé, qui tire parti de mesures, photos ou nuages de points, réalisées avec au moins deux points de vue différents. L'algorithme peut comparer les positions relatives de points de l'objet identifiables sur les différents points de vue. L'algorithme peut en outre tirer parti des éléments de texture pour améliorer la qualité de la reconstruction 3D.

L'algorithme est couplé à une technique de voxelisation pour obtenir un modèle numérique sous forme de voxels.

La figure 1f représente un exemple de modèle numérique 3D du bâtiment B1 obtenu après transformation du nuage de points de la figure le en voxels 50.

Chaque modèle numérique 3D peut être stocké dans le moyen de stockage 11 pour servir de modèle 3D de référence, géo-localisé, et associé à des métadonnées telles que la précision avec laquelle tout ou partie des voxels qui les constituent est référencée spatialement et/ ou la date à laquelle les données utilisées pour générer le modèle 3D ont été acquises.

Le moyen de stockage 11 peut fournir un catalogue de modèles numériques 3D géo-localisés servant de référence, au sein d'une zone d'intérêt donnée, pouvant être utilisés pour se repérer dans la zone à l'aide d'un outil numérique.

Selon la précision des modèles numériques 3D géo-localisés, ces derniers peuvent être utilisés dans des contextes différents, par exemple la géo-localisation d'un outil numérique et/ ou une acquisition numérique réalisée par cet outil.

La précision de localisation d'un voxel peut être calculée par rapport à tout référentiel, local ou absolu comme sera détaillé plus loin.

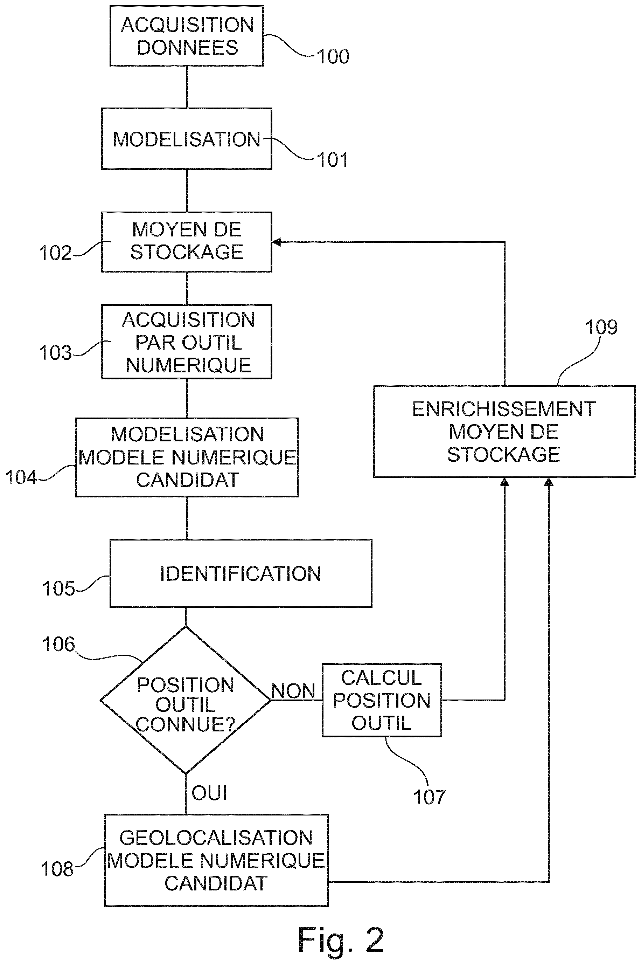

On a illustré aux figures 2 à 4 un procédé de géolocalisation dans un environnement de la zone Z utilisant les informations disponibles dans le moyen de stockage informatique selon l'invention.

Aux étapes 100, 101 et 102, une acquisition numérique est réalisée à l'aide de tout outil numérique 20, un ou plusieurs modèles numériques 3D est générés et les modèles est stockés dans le moyen de stockage ainsi que des métadonnées telles qu'une information sur la précision avec laquelle tout ou partie des données utilisées pour générer les modèles 3D est référencée, la date d'acquisition de ces données et les références du secteur, comme expliqué plus-haut dans l'exemple des figures la-f.

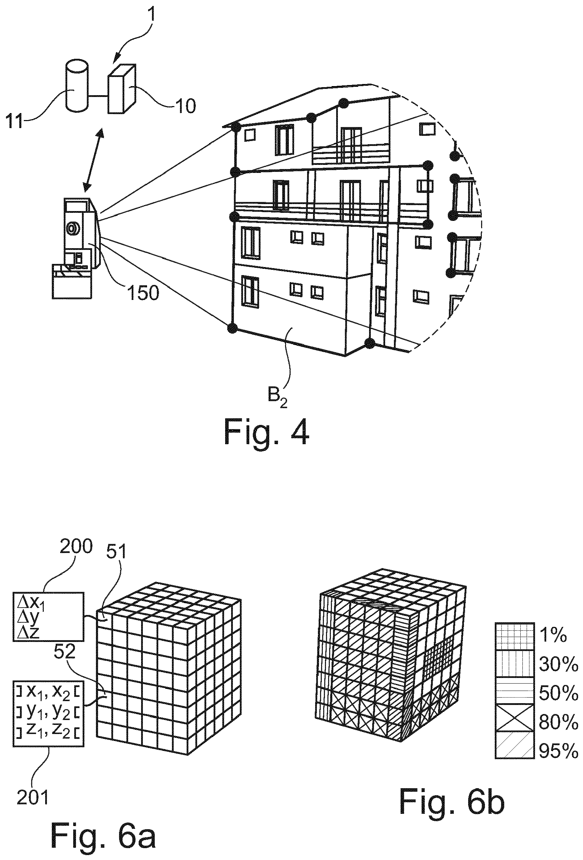

A l'étape 103 une acquisition de données de tout ou partie d'un environnement de la zone Z où l'on cherche à se géo-localiser est réalisée avec un outil numérique 150, comme illustré à la figure 4. Dans cet exemple, on réalise avec l'outil numérique une acquisition d'une façade d'un immeuble B2 d'un secteur 301 de la zone Z.

Les données sont ensuite transmises à la plateforme 1 moyennant l'interface 10 avec laquelle l'outil 20 peut échanger. Ces données sont ensuite utilisées pour générer un modèle numérique 3D, dit candidat, par un processus de modélisation qui peut être similaire à celui de l'étape 101.

Afin de géo-localiser le modèle numérique candidat, on identifie à l'étape 105, à l'aide d'un outil de corrélation, le modèle numérique 3D de référence du moyen de stockage 11, qui est le mieux corrélé avec le modèle numérique candidat. Il s'agit par exemple d'un modèle numérique 3D géo-localisé du même immeuble B2, précédemment réalisé par unee acquisition de l'immeuble par lasergrammétrie par un topographe par exemple.

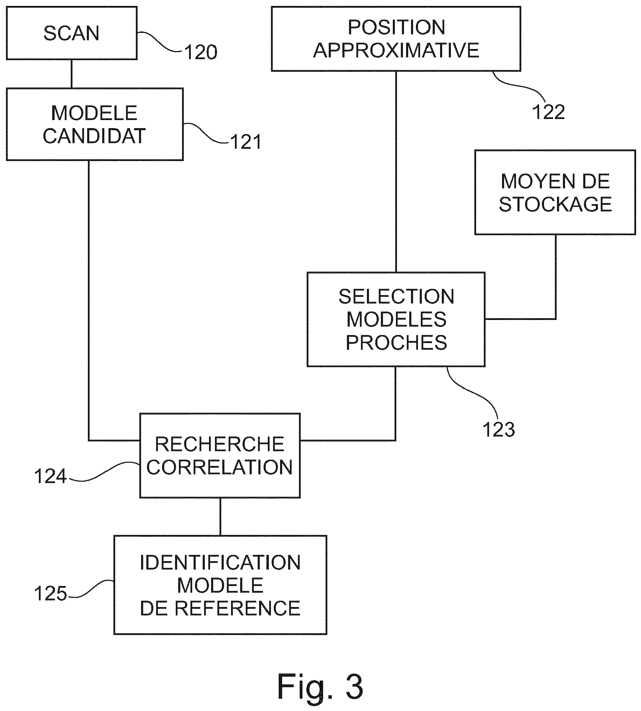

Le modèle numérique de référence peut notamment être identifié en suivant les étapes illustrées à la figure 3. Dans un premier temps, on peut utiliser une information apportée à l'étape 122 par la connaissance de la position approximative de l'outil numérique 150. Cette information peut être fournie par un système de géolocalisation par satellites, de préférence standard et peu coûteux ou une information de géolocalisation telle que fournie par un réseau de téléphonie mobile. Cette information permet d'effectuer à l'étape 123 une première sélection parmi les modèles numériques 3D de références disponibles dans le moyen de stockage 102, pour faire porter l'identification seulement sur un ensemble de modèles numériques 3D proches géographiquement du modèle candidat. Cette étape permet de réduire le temps de traitement, puisque ainsi la recherche de corrélation de l'étape 124 ne s'effectue in fine que sur une sélection restreinte de modèles numériques 3D. La sélection des modèles numériques 3D de référence peut être également réalisée en indiquant une référence du secteur contenant le bâtiment B2, notamment le nom du quartier ou de la rue. Cela permet d'effectuer une recherche des modèles 3D qui sont dans le même secteur en utilisant la métadonnée prévue à cet effet qui est enregistrée au préalable dans le moyen de stockage 11.

Cette recherche de correspondance par l'outil de corrélation peut s'effectuer par exemple à l'aide d'un réseau de neurones entraîné à reconnaître un modèle numérique 3D à partir d'un scan ou de tout algorithme d'optimisation, par exemple par moindres carrés.

On peut déterminer une ou plusieurs formes géométriques de référence communes à la fois au modèle candidat et au modèle de référence, et on identifier les emplacements géo-référencés correspondants.

La connaissance de ces emplacements peut permettre de géo-localiser à l'étape 108 le modèle numérique 3D candidat, de sorte que les coordonnées, notamment géodésiques, de chaque point de ce modèle peuvent être obtenues dans un référentiel, de préférence absolu. En outre, la connaissance de l'emplacement des caractéristiques communes peut permettre de calculer la position de l'outil à l'étape 107 quand celle-ci est inconnue, par exemple en utilisant des méthodes géométriques. Outre les coordonnées de localisation, il est possible d'obtenir la précision de localisation ainsi que la date à laquelle le modèle numérique 3D et / ou l'outil numérique ont été géo-localisés.

Enfin, ce procédé peut comprendre également une étape 109 de stockage du modèle numérique 3D candidat, avec des informations concernant l'emplacement et la précision de localisation de certains points caractéristiques, dans le moyen de stockage 102, pour enrichir celui-ci.

La précision de localisation d'un voxel peut être calculée par rapport à tout référentiel, local ou absolu. En particulier, cette précision peut être calculée en faisant intervenir une cascade de repères intermédiaires chacun repéré avec une précision de localisation propre.

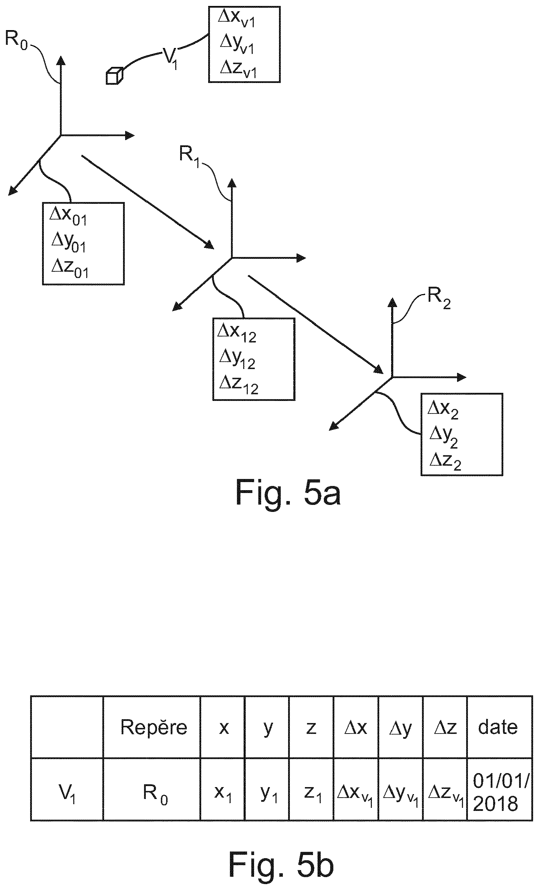

Les figures 5a et 5b illustrent un exemple d'utilisation d'une cascade de repères selon l'invention où l'on cherche à calculer la précision de localisation du voxel v₁ par rapport au repère (R₂) en utilisant deux repères intermédiaires (R₀) et (R₁).

Dans cet exemple, la localisation du voxel v₁ est connue dans le repère (R₀) avec une précision Δ*x*_{*v*₁}*,* Δ*y*_{*v*₁} et Δ*z*_{*v*₁} dans les trois directions x, y et z respectivement. Le repère (R₀) est lui-même localisé dans le repère (R₁) avec une précision Δ*x*₀₁, Δ*y*₀₁ et Δ*z*₀₁ et la position du repère (R₁) est connue dans le repère (R₂) avec une précision Δ*x*₁₂, Δ*y*₁₂ et Δ*z*₁₂. Enfin la position du repère (R₂), qui est par exemple un référentiel absolu, est elle-même connue avec une précision Δ*x*₂, Δ*y*₂ et Δ*z*₂. Cette précision prend en compte un certain nombre de phénomènes qui impactent la position du centre de ce repère, notamment les déformations du sol, en particulier du type marée terrestre, surcharge océanique, surcharge atmosphérique et/ou mouvements tectoniques, altération linéaire, variation du géoïde. Ces informations sont préalablement enregistrées dans le moyen de stockage 11. La figure 5b représente un exemple d'enregistrement des données concernant le voxel v₁ sous la forme d'un tableau. Celui-ci comporte les coordonnées du voxel v₁ dans le repère (R₀) ainsi que la précision avec laquelle ce voxel est localisée et la date de la création de la donnée.

Cette approche permet ainsi à tout moment de calculer la précision de localisation d'un voxel et/ ou d'un repère de la cascade par rapport à un autre repère de celle-ci.

On a représenté aux figures 6a et 6b des exemples de visualisation d'un objet modélisé avec une information relative à la précision de localisation des voxels.

La figure 6a illustre un exemple d'affichage de l'information sur la précision sous la forme numérique ou d'une valeur de confiance absolu. Cette information est affichée dans les fenêtres 200 et 201 en cliquant sur les voxels 51 et 52 par exemple. La valeur de confiance absolue peut correspondre à un intervalle de valeurs de position pouvant contenir la vraie position du voxel, comme affiché dans la fenêtre 201.

Dans la figure 6b, la plateforme 1 permet d'accompagner le modèle numérique 3D d'une valeur de confiance probabiliste permettant de vérifier visuellement le niveau d'incertitudes associé à la précision sur la localisation des voxels. Dans cet exemple, on associe à chaque niveau d'incertitudes une couleur appartenant par exemple à un dégradé de couleurs. Ainsi les voxels ayant le même niveau d'incertitudes sont affichés avec la même couleur. Cette visualisation peut être accompagnée d'une légende 250. Il est également possible de filtrer les voxels pour n'afficher que les voxels possédant un niveau d'incertitude au-dessus ou en-dessous d'un seuil donné. On a représenté à la figure 6b la probabilité que la précision sur la localisation du voxel soit inférieure à 1cm.

Bien entendu, l'invention n'est pas limitée aux exemples décrits. Les modèles 3D ne sont pas limités à la représentation extérieure des objets et s'appliquant également à l'intérieur des objets par exemple.

L'expression « comportant un » doit être comprise avec son sens usuel comme étant synonyme de « comprenant au moins un ».

## Revendications

1. Moyen de stockage (11) informatique sur lequel est stocké au moins un modèle numérique 3D d'au moins un objet, ce modèle comportant un ensemble de voxels modélisant cet objet et des métadonnées associées aux voxels (50-52, vi), comportant au moins une information sur la précision avec laquelle tout ou partie de ces voxels (50-52, v₂) est référencée spatialement.

2. Moyen selon la revendication 1, l'information sur la précision avec laquelle un voxel (50-52 ; v₁) est référencé spatialement comportant au moins une indication sur la manière, relative et/ ou absolue, dont cette précision est définie.

3. Moyen selon l'une des revendications 1 et 2, l'information sur la précision avec laquelle un voxel (50-52 ; v₁) est référencé spatialement comportant une première indication sur la précision de positionnement relative dudit voxel au sein d'un sous-ensemble auquel appartient le voxel (50-52 ; v₁) et une deuxième indication sur la précision de positionnement de ce sous-ensemble dans un repère (R).

4. Moyen selon la revendication 3, la position dudit repère (R) étant elle-même connue dans un autre référentiel (R'), de préférence absolu, et cette position étant dépendante d'au moins une grandeur enregistrée dans le moyen de stockage (11) ou pouvant être calculée à partir de paramètres renseignés dans ce moyen de stockage (11), notamment de déformations du sol, en particulier du type marée terrestre, surcharge océanique, surcharge atmosphérique et/ou mouvements tectoniques.

5. Moyen selon la revendication 4, la position dudit repère (R) étant connue dans ledit référentiel (R') via une cascade de repères intermédiaires (Ri).

6. Moyen selon la revendication précédente, la précision avec laquelle la position d'un repère intermédiaire (Ri) est connue relativement à au moins un autre repère (Rj) de ladite cascade de repères intermédiaires, étant enregistrée dans le moyen de stockage et/ou la précision avec laquelle la position dudit repère (R) est connue dans ledit référentiel (R') étant calculée à partir des précisions de localisation de chacun des repères intermédiaires (Rk) de ladite cascade de repères intermédiaires, de préférence le nombre de repères intermédiaires (Rk) en cascade, dont les précisions de localisation sont de préférence enregistrées dans le moyen de stockage (11), étant différent pour au moins deux objets référencés à l'aide de ces repères intermédiaires.

7. Moyen selon l'une quelconque des revendications précédentes, l'objet étant choisi parmi des éléments d'infrastructures, notamment routes, ponts, tunnels, voies ferroviaires, de barrages, de bâtiments, notamment l'enveloppe extérieure et intérieure de réseaux aériens ou enterrés, de mobilier urbain et/ou d'équipements, de navires.

8. Moyen selon l'une quelconque des revendications précédentes, les métadonnées associées aux voxels (50-52 ; v₁) comportant en outre une information relative à un attribut de l'objet et/ou à une date, notamment une date de création ou de mise à jour de la donnée, et/ou concernant l'origine de la donnée et son moyen d'acquisition.

9. Moyen selon l'une quelconque des revendications précédentes, comportant :
- des modèles numériques 3D correspondant à des objets ou scènes couvrant une étendue supérieure à 1 km²,
- des modèles numériques 3D correspondant à des objets ou scènes disséminés avec une densité supérieure à 100 par km²,
- au moins deux modèles numériques 3D correspondant à des objets séparés d'une distance inférieure à 100 m, et/ou
- des modèles numériques 3D dont les voxels (50-52 ; v₁) sont géo-référencés avec une précision de localisation meilleure que 0,4 m dans un référentiel, de préférence absolu, mieux meilleure que 0,2 m, encore mieux meilleure que 0,1 m, notamment comprise entre 1 et 10 cm.

10. Plateforme informatique (10) comportant un moyen de stockage (1) selon l'une quelconque des revendications précédentes, comportant de préférence une interface (11) graphique permettant de visualiser l'objet modélisé ainsi que sa précision de localisation, notamment sous la forme d'au moins une indication numérique ou d'un volume de confiance absolu ou probabiliste.

11. Procédé de géolocalisation, notamment en extérieur, d'un outil d'acquisition numérique (150) présent au sein d'une zone donnée (Z), notamment d'un environnement extérieur urbain, ce procédé comportant les étapes consistant à:
a) Réaliser avec l'outil numérique (150) au moins une acquisition de son environnement,
b) identifier par une technique de corrélation entre les données acquises et des modèles numériques 3D, au moins un modèle numérique 3D d'au moins un objet de ladite zone (Z), ce modèle étant stocké dans un moyen de stockage (11) selon l'une quelconque des revendications 1 à 9,
c) calculer, à partir de cette identification et/ou de la manière dont ledit modèle numérique 3D est perçu par l'outil (150), les coordonnées de l'outil numérique (150) dans un référentiel,
De préférence, un modèle numérique 3D étant généré à partir de l'acquisition numérique géolocalisée à l'étape c).

12. Procédé de géolocalisation, notamment en extérieur, d'une acquisition numérique d'une zone donnée effectuée (Z) avec un outil d'acquisition numérique (150), ce procédé comportant les étapes consistant à:
a')identifier par une technique de corrélation entre les données acquises et les modèles numériques 3D, au moins un modèle numérique 3D d'au moins un objet de ladite zone (Z), ce modèle étant stocké dans un moyen de stockage (11) selon l'une quelconque des revendications 1 à 9,
b')géo-localiser ladite acquisition numérique à partir de cette identification.

13. Procédé selon la revendication 11, dans lequel on délivre une information sur la précision de géo-localisation de l'outil (150), calculée obtenue à partir d'au moins une information sur la précision avec laquelle tout ou partie des voxels (50-52 ; v₁) du modèle numérique 3D est référencé spatialement.

14. Procédé selon la revendication 12, dans lequel on délivre une information sur la précision de géo-localisation de l'acquisition numérique, calculée obtenue à partir d'au moins une information sur la précision avec laquelle tout ou partie des voxels (50-52 ; v₁) du modèle numérique 3D est référencé spatialement.

15. Procédé selon l'une quelconque des revendications précédentes 11 à 14, l'identification à l'étape b) et/ou à l'étape a') faisant intervenir au moins une information additionnelle de positionnement, notamment une information additionnelle fournie par un système de géolocalisation par satellites par exemple, de préférence l'information de localisation additionnelle ayant une précision de localisation dans le référentiel (R') moindre que celle associée aux voxels d'un ou des modèles numériques 3D répertoriés dans le moyen de stockage (11) à partir desquels s'effectue l'identification à l'étape b) et/ou l'étape b').

16. Procédé selon la revendication précédente, comportant une étape additionnelle d) et /ou c') dans laquelle on enregistre dans le moyen de stockage le modèle (11) numérique 3D issu de l'acquisition numérique géo-localisée à l'étape c) ainsi de préférence qu'une information relative à la précision de de localisation de celle-ci.

17. Procédé selon l'une quelconque des revendications précédentes 11 à 16, l'acquisition numérique étant réalisée par télédétection laser ou par photogrammétrie.

18. Procédé selon l'une quelconque des revendications précédentes 11 à 17, le modèle numérique 3D issu de l'acquisition numérique étant mis à l'échelle à partir du modèle numérique stocké dans le moyen de stockage (11).

19. Procédé de construction d'un modèle numérique 3D comportant les étapes consistant à :
- Procéder à au moins une acquisition numérique d'au moins un objet géo-localisé,
- enregistrer dans un moyen de stockage (11) selon l'une quelconque des revendications 1 à 9, une information relative à la précision de localisation de la ou les acquisitions numériques,
- générer à partir de cette ou ces acquisitions au moins un modèle numérique 3D,
- attribuer à au moins un voxel (50-52 ; v₁) de ce modèle 3D une information relative à sa précision de localisation de celui-ci.
- enregistrer ce modèle numérique 3D géo-référencé dans le moyen de stockage (11).
